# EUROPEAN PATENT APPLICATION

(11) **EP 3 531 354 A1**
(43) Date of publication of application: **28.08.2019**
(21) Application number: 19158361.6
(22) Date of filing: 20.02.2019
(51) Int. Cl.: G06Q 10/08

(54) **DELIVERY COOLER MANAGEMENT SYSTEM**

(30) Priority: 23.02.2018 US 201862634639 P
(71) Applicant: Carrier Corporation, Palm Beach Gardens, FL 33418 (US)
(72) Inventor: SPATH, Anthony J., West Hartford, CT 06110 (US)
(74) Representative: Dehns

(57) **Abstract**

A method for delivering one or more orders of goods (42) to one or more customers using a one or more coolers (100), each cooler comprising: a compartment (212); a thermoelectric device (360); a battery for powering the thermoelectric device to cool the compartment; a temperature sensor (390); a radio (370); a controller (330) coupled to the thermoelectric device, temperature sensor, and radio, the method comprising: loading the at least one cooler with goods; after the loading, transporting the one or more coolers to one or more destinations; unloading the one or more coolers at the one or more destinations; during the transporting, monitoring, via the associated temperature sensor, respective temperatures of the one or more coolers; determining noncompliance of the measured temperature with at least one standard; and responsive to the noncompliance sending a communication to one or more of the customers whose orders were subject to the noncompliance.

## Description

The present invention relates to a method for delivering one or more orders of goods to customers using one or more coolers, as well as to corresponding devices. The disclosure relates to transport refrigeration. More particularly, the disclosure relates to portable refrigerated coolers.

Refrigerated trucks and trailers are commonly used to transport perishable cargo, such as, for example, produce, meat, poultry, fish, dairy products, cut flowers, medicines, vaccines, and other fresh or frozen perishable products. A transport refrigeration system is mounted to the truck or to the trailer in operative association with a cargo space defined within the truck or trailer for maintaining a controlled temperature environment within the cargo space.

Conventionally, transport refrigeration systems used in connection with refrigerated trucks and refrigerated trailers include a transport environmental control unit formed as a vapor compression system having a refrigerant compressor, a condenser (heat absorption heat exchanger) with one or more associated condenser fans, an expansion device, and an evaporator (heat rejection heat exchanger) with one or more associated evaporator fans, which are connected via appropriate refrigerant lines in a closed refrigerant flow circuit. Air or an air/ gas mixture is drawn from the interior volume of the cargo space by means of the evaporator fan(s) associated with the evaporator, passed through the air side of the evaporator in heat exchange relationship with refrigerant whereby the refrigerant absorbs heat from the air, thereby cooling the air. The cooled air is then supplied back to the cargo space.

The perishable cargo may also need to be transported for the "last mile" to the consumer via a non-refrigerated trucks or other vehicle such as a motorcycle or bicycle. Typically, last mile cooling is served by insulated containers optionally kept cool via either dry ice or frozen solution.

Viewed from a first aspect, the present invention provides a method for delivering one or more orders of goods to one or more customers using a one or more coolers. Each cooler comprises: a compartment; and an environmental control unit including: a temperature sensor; a radio; and a controller coupled to the thermoelectric device, temperature sensor, and radio. The method comprises: loading the at least one cooler with goods; after the loading, transporting the one or more coolers to one or more destinations; unloading the one or more coolers at the one or more destinations; during the transporting, monitoring, via the associated temperature sensor, respective temperatures of the one or more coolers; determining noncompliance of the measured temperature with at least one standard; and, responsive to the noncompliance, taking a remedial action.

The remedial action may comprise sending a communication to one or more of the customers whose orders were subject to the noncompliance and/or aborting delivery of one or more goods subject to the noncompliance. In the case of aborting delivery, the method may comprise ordering replacements for the one or more goods whose delivery was aborted.

The environmental control unit may comprise a thermoelectric device and a battery for powering the thermoelectric device to cool the compartment, with the controller being coupled to the thermo electric device.

Optionally, the monitoring comprises communicating via the radio to a handheld device.

Optionally, the sending comprises a server sending to a customer app.

Optionally, the communication requests an instruction on a disposition of the goods subject to the noncompliance.

Optionally, the method further comprises: determining a further action based on at least one of a nature of the noncompliance and a profile of each of the one or more of the customers whose orders were subject to the noncompliance.

Optionally, the determining of the further action is performed by one or more devices using a database of customer-specific information.

Optionally, the determining of the further action is performed by one or more devices using a database of goods-specific information regarding compliance with said standard.

Viewed from another aspect, the invention provides one or more devices for managing delivery of one or more orders of goods to one or more customers using one or more coolers. Each cooler comprises: a compartment; and an environmental control unit including: a temperature sensor; a radio; and a controller coupled to the thermoelectric device, temperature sensor, and radio. The one or more devices run one or more programs for: receiving measured temperature data for the one or more coolers; determining noncompliance of the measured temperature with at least one standard; and, responsive to the noncompliance, taking a remedial action.

The environmental control unit may comprise a thermoelectric device and a battery for powering the thermoelectric device to cool the compartment, with the controller being coupled to the thermoelectric device.

Optionally, the remedial action comprises sending a communication to one or more of the customers whose orders were subject to the noncompliance and/or aborting delivery of one or more goods subject to the noncompliance.

Optionally, the communication requests an instruction on a disposition of the goods subject to the noncompliance.

Optionally, the program is further configured to determine the remedial action based on at least one of a nature of the noncompliance and a profile of each of the one or more of the customers whose orders were subject to the noncompliance.

Optionally, the determining of the remedial action is performed by the one or more devices using a database of customer-specific information.

Optionally, the determining of the remedial action is performed by the one or more devices using a database of goods-specific information regarding compliance with said standard.

Optionally, the remedial action comprises automatically aborting delivery of the goods subject to the noncompliance and setting up delivery of a replacement.

Optionally, the one or more devices comprise one or more servers.

Optionally, the one or more devices comprise a combination of one or more servers and one or more portable electronic devices.

Another aspect of the disclosure, which is not currently claimed, involves a handheld device having: a display; an input device; a processor; at least one of storage and memory. The at least one of storage and memory contains a program for: ordering goods for delivery in one or more coolers; displaying temperature measured by said one or more coolers; and displaying a menu for selecting a disposition of one or more of the goods that have experienced temperature outside a predetermined range.

Optionally, said program is further configured to transmit a selection of said disposition.

A further aspect of the disclosure, which is not currently claimed, involves a handheld device having: a display; an input device; a processor; at least one of storage and memory. The at least one of storage and memory contains a program for: maintaining a database of customer orders for goods contained in one or more coolers; communicating with the coolers to receive temperature state information from the coolers and forward said temperature state information to a remote location; and receive from the remote location changes in the customer orders.

Optionally, said program is further configured to instruct the driver for nondelivery of one or more of the goods.

The details of one or more embodiments are set forth in the accompanying drawings and the description below. Other features, objects, and advantages will be apparent from the description and drawings, and from the claims.
FIG. 1 is a view of a cooler or refrigerated transport system.
FIG. 2 is a view of an environmental control unit of the cooler.
FIG. 3 is a schematic view of a warehouse processing such coolers.
FIG. 4 is a schematicized/simplified screenshot of the screen on a driver's app for causing the device running the app to page coolers to fulfill orders.
FIG. 5 is a driver's app schematicized screenshot showing an order list for a trip.
FIG. 6 is a driver's app schematicized screenshot for causing the device to page coolers containing a given order at the point of delivery.
FIG. 7 is a schematicized screenshot of an app screen on the customer smartphone for placing an order.
FIG. 8 is a tabular representation of a database portion correlating goods with various associated levels of temperature acceptability.
FIG. 9 is a tabular representation of a database portion correlating customers with various associated profiles.
FIG. 10 is a flowchart of a method for correlating customers with profiles which may be used to produce the FIG. 9 database portion or maybe used in lieu of having the FIG. 9 database portion.
FIG. 11 is a tabular representation of a database portion correlating responsive/remedial actions with action codes.
FIG. 12 is a tabular representation of a database portion correlating the FIG. 8 goods-specific levels of temperature acceptability and the FIG. 9/10 profiles with FIG. 11 action codes and, thereby, responsive/remedial actions.
FIG. 13 is a schematicized screenshot of an app screen on the customer smartphone showing status information
FIG. 14 shows the FIG. 13 app screen upon occurrence of a departure
FIG. 15 is a schematicized screenshot of the app screen on the customer smartphone showing options responsive to the departure.
FIG. 16 is a schematicized screenshot of an order list screen of the driver's app during a delivery trip.
FIG. 17 is a schematicized screenshot of an app screen of the driver's app showing further information on an order being delivered.
FIG. 18 shows the FIG. 16 screen upon occurrence of a departure.
FIG. 19 is a simplified screenshot of an app screen of the driver's app showing further information regarding how to handle the order having the departure.

Like reference numbers and designations in the various drawings indicate like elements.

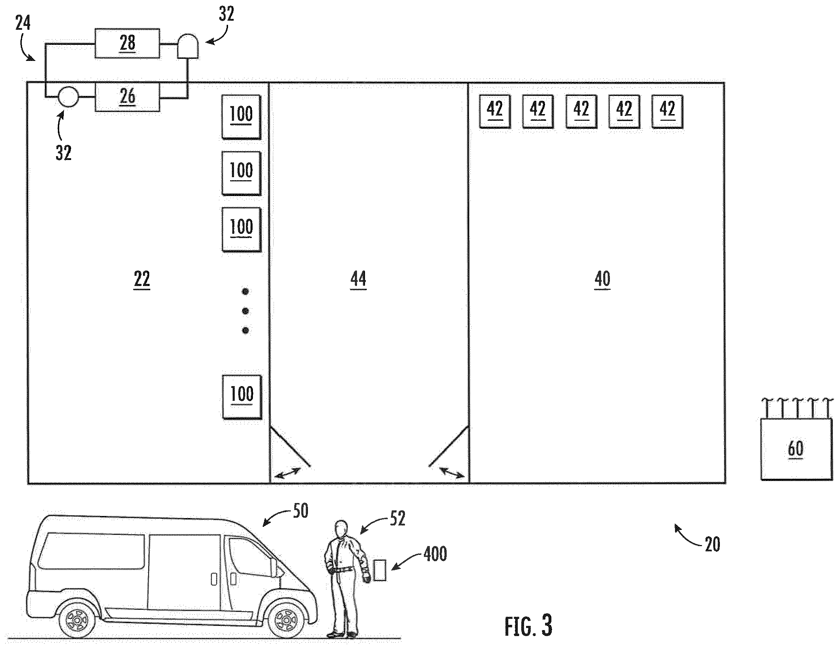

A management system for such last mile use of coolers focuses on an example using non-refrigerated trucks (hereafter "vans") to carry multiple coolers. In this example, key operations occur in a warehouse 20 (FIG. 3). The exemplary warehouse includes one or more pre-cooling rooms 22 or other areas where coolers 100 are pre-cooled. The precooling room is cooled by a refrigeration system 24 (e.g., a vapor compression system). For example one or more heat absorption heat exchangers 26 of the vapor compression system 24 may be located in the pre-cooling room. A heat rejection heat exchanger 28 may be outside as may be a compressor 30. FIG. 3 further shows an expansion device 32 in the vapor compression system. The foregoing is merely a schematic illustration of a basic vapor compression system.

The warehouse further includes one or more refrigerated storage areas 40 for storing goods 42. Each refrigerated storage area may have its own refrigeration system 24 (not separately shown) or they (optionally along with the precooling rooms and any other refrigerated rooms) may be cooled in common.

The warehouse further includes one or more fulfillment areas 44 for loading of coolers. Each fulfilment area may have its own refrigeration system or they (optionally along with the precooling rooms and storage areas rooms) may be cooled in common.

In one example, separate storage areas are kept at different temperatures for different types of goods (e.g., frozen food at -18°C, produce at 1°C, and other non-frozen perishables at 4°C, and the like). However, in this example, the pre-cooling room(s) and fulfilment area(s) are at one temperature each (e.g., 0°C for the pre-cooling rooms and 10°C for the fulfilment areas).

FIG. 3 further shows one or more vans 50 along with their respective drivers 52. Each driver has a computing device 400 (e.g., a portable hand-held electronic device such as a smartphone) for communicating with the coolers and one or more servers 60 managing operation of the system. The servers may be onsite or off-site (e.g., cloud-based). The exemplary servers have appropriate communications equipment for communications over at least the internet and any other appropriate public and/or private networks. These servers individually and/or collectively may include appropriate processors (e.g., microprocessors), memory, storage (e.g., hard drives, solid state memory, and the like for storing programs and databases), communications interfaces, and the like. The processors and memory execute programs held in the storage to perform basic computer/server functions and the specific functions associated with acting as a central managing the system as discussed below.

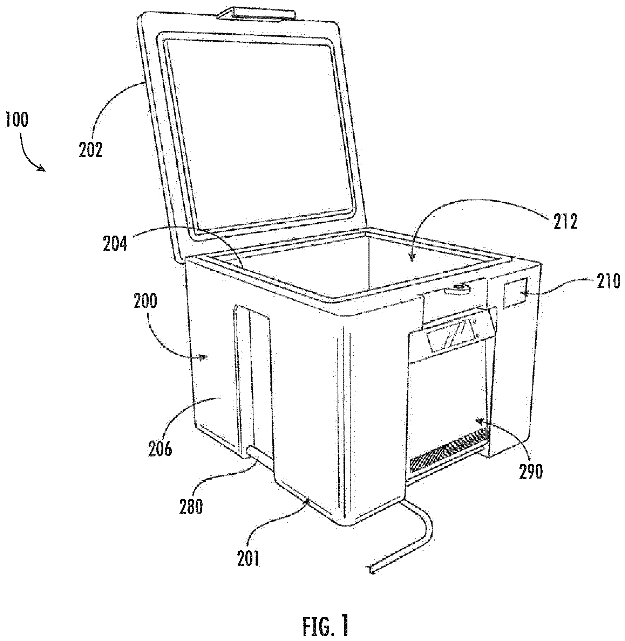

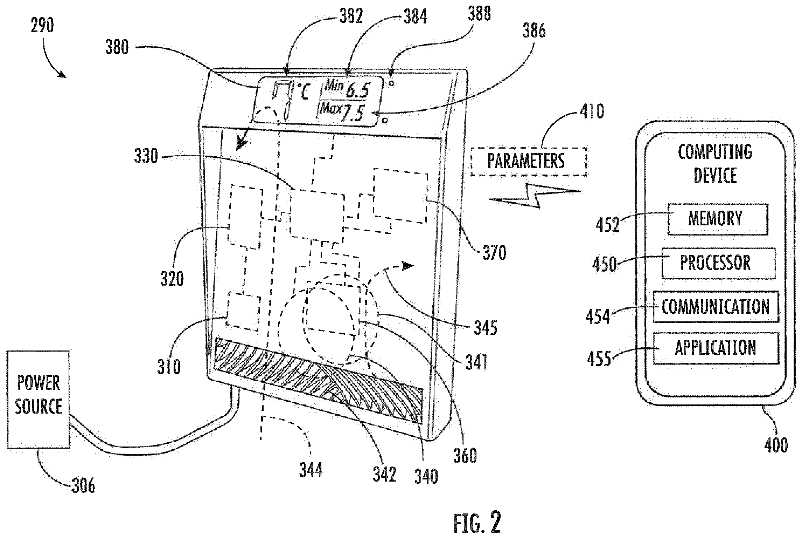

FIGs. 1 and 2 show details of an exemplary cooler. FIG. 1 shows one example of a cooler or refrigerated transport system 100 includes a cooler body or transport container 200 and an environmental control unit 290 removably connected to the transport container 200. Alternative coolers may have non-removable environmental control units. The environmental control unit 290 may be removable from the transport container 200 and may be connected to a variety of different transport containers other than what is depicted in FIG. 1. The environmental control unit 290 provides cooling in a cooling mode.

The transport container 200 may be composed of a base 201 and a lid 202. As shown in FIG. 1, base 201 may be an open ended container wherein perishable cargo, such as, for example, produce, meat, poultry, fish, dairy products, cut flowers, pharmaceuticals, organs, and other fresh/frozen perishable products, is stowed for transport. The lid 202 is configured to fit on the base 201, thus enclosing the perishable cargo within the transport container 200. The lid 202 is configured to securely fasten to the base 201 such that an airtight seal is created between the lid 202 and the base 201. The base 201 and the lid 202 may be composed of a plastic, metal vacuum, extruded polystyrene foam, polyurethane foam, polyethylene foam, or other lightweight insulating material. In one embodiment, the base 201 is collapsible and may be folded when not in use for easy storage and transportation.

The base 201 further includes an interior 204 surface (forming a refrigerated compartment 212) and an exterior 206. The compartment 212 houses the perishable goods and may be subdivided into one or more separate subcompartments by one or more dividers (not shown). One or more anchors 280 may be configured on the exterior 206 of the base 201 so that the refrigerated transport system 100 may be secured to a vehicle, such as, for example a motorcycle.

FIG. 2 shows the environmental control unit 290. The environmental control unit 290 may include a power convertor 310, a battery 320, a controller 330, a first fan 340, a second fan 341, a thermoelectric device 360, a communication module 370, and a control panel 380. The thermoelectric device 360 provides cooling to the transport container 200. The thermoelectric device 360 in operation generates heating/cooling by creating a temperature difference across two sides of the thermoelectric device 360 when a voltage is applied to the thermoelectric device 360. For cooling operation, the side in thermal communication with the compartment is the cool side and the side in thermal communication with the environment exterior to the cooler is the hot side. The amount of heating and cooling changes in response to polarity of the voltage that is applied to the thermoelectric device 360 as the material properties cause the atoms to diffuse to a first side or a second side of the thermoelectric device 360. This is also known as Peltier effect. The fan 340 pulls in air (airflow) 344 external to environmental control unit 290 through a vent 342. The air 344 passes across the hot side of the TED 360, absorbs heat and is discharged. The fan 341 drives an internal recirculating airflow 345 across the cold side of the TED to cool the compartment. It is to be understood that the term "air" when used herein with reference to the atmosphere draw into the environmental control unit 290 by the first fan 340 or recirculated by the second fan 341 may include a mixture of oxygen with other gases, such as for example, but not limited to, nitrogen or carbon dioxide. The fans 340, 341 may each be rotated by a fan motor (not shown) powered by the power source 306 and/or the battery 320.

The environmental control unit 290 also includes a controller 330 configured for controlling the operation of the environmental control unit 290 including, but not limited to, the operation of thermoelectric device 360 and fans 340, 341 to provide and maintain a desired thermal environment within the transport container 200. The controller 330 may be an electronic controller including a processor and an associated memory comprising computer-executable instructions that, when executed by the processor, cause the processor to perform various operations. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium. The operation of the environmental control unit 290 may also be controlled through the control panel 380 located on the exterior of the environmental control unit 290. Using the control panel 380, users may set a selected temperature 382 for the compartment 212. Also using the control panel 380, users may set a maximum temperature 386 and a minimum temperature 384 for the selected temperature 382. As is discussed further below, the control panel may include one or more status lights 388 (e.g., LED) or audio speaker or other audio transducer.

The controller 330 is in electronic communication with the communication module 370. The communication module 370 may be in wireless communication with a computing device 400, such as, for example a smart phone, PDA, smart watch, tablet, laptop computer, desktop computer etc. The computing device 400 may include a touch screen as a display and input device, mouse, keyboard, scroll wheel, physical button, or any input mechanism known to one of skill in the art. The computing device 400 may include a processor 450, memory 452 and communication module 454 as shown in FIG. 2. The processor 450 can be any type or combination of computer processors, such as a microprocessor, microcontroller, digital signal processor, application specific integrated circuit, programmable logic device, and/or field programmable gate array. The memory 452 is an example of a non-transitory computer readable storage medium tangibly embodied in the computing device 400 including executable instructions stored therein, for instance, as firmware. The communication module 454 may implement one or more communication protocols as described in further detail herein. Embodiments herein generate a graphical user interface on the computing device 400 through an application 455.

The wireless communication between the communication module 370 of the environmental control units 290 and the communication module 454 of the computing device 400 may be satellite, WiFi, cellular, Bluetooth, other radio communication, or any other wireless communication method known to one of skill in the art. In a particular example, the cooler has only a two-way Bluetooth module (radio) 370; whereas the computing device has separate two-way Bluetooth, WiFi, and cellular radios in addition to a GPS receiver. The computing device 400 may be configured to wirelessly control the operation of the environmental control unit 290 and/or display the parameters 410 of the environmental control unit 290. The parameters 410 may include but are not limited to location of the environmental control unit 290, temperature of the cooling output of the environmental control unit 290, and humidity of the cooling output of the environmental control unit 290. The location and temperature output may be detected but one or more sensors 390. A sensor 390 may include a temperature sensor (e.g., thermistor) or humidity sensor. A sensor 390 may include a GPS sensor configured to determine the location of the environmental control unit 290. A destination may be included as one of the parameters 410, where the destination is the physical destination intended for one or more of the items being cooled by the transport container 200. The parameters may include a number of times the lid 202 and/or 240 have been opened.

The environmental control unit 290 may be powered by a power source 306 and/or a battery 320. The power source 306 may charge the battery 320 such that the battery 320 may provide power to the environmental control unit 290 when the environmental control unit 290 is receiving reduced and/or no power from the power source 306. The power source 306 may comprise an AC generator configured to generate alternating current (AC) power including at least one AC voltage at one or more frequencies. The power source 306 may, for example, be a permanent magnet AC generator or a synchronous AC generator. The power source 306 may comprise a single on-board, DC generator configured to generate direct current (DC) power at least one voltage. The power source 306 may be a flywheel generator operably connected to a rotating component of a vehicle. The power source 306 may be an onboard battery of a vehicle, such as, for example a 12 Volt battery. Some power sources may have internal voltage regulators while other power sources do not. It is to be understood that various power converters 310, such as AC to DC rectifiers, DC to AC inverters, AC to AC voltage/frequency converters, and DC to DC voltage converters, may be employed in connection with the power source 306 as appropriate. The power converter 310 may include a voltage sensor to sense the voltage of the power source 306. The power source 306 may also include a battery, a solar panel, or any similar power source known to one of skill in the art. In the particular warehouse example, the power source may be building AC service in the pre-cooling room 22.

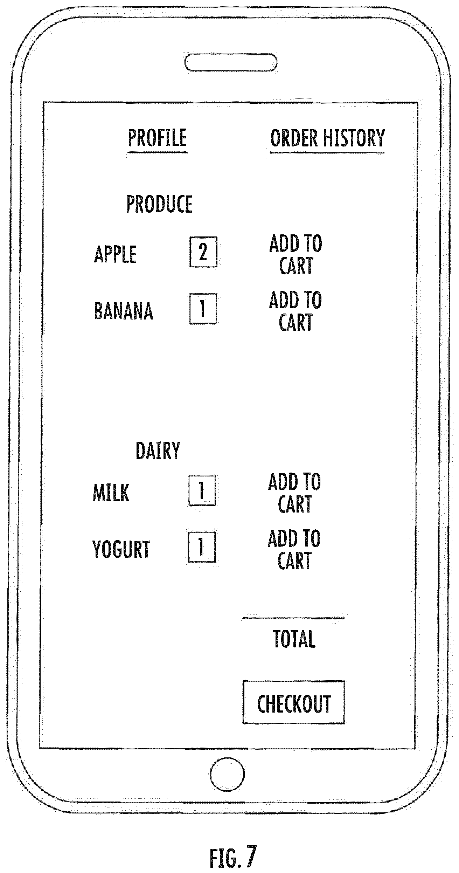

The servers 60 (FIG. 3) may receive customer orders (e.g., via the internet) and manage fulfillment of those orders. Thus customers may place orders via the internet (e.g., using web browsers, apps, or the like). In one example, a customer places an order via an app on his smartphone or similar portable device. The customer smartphone 400 may be the same or similar to the driver's smartphone 400 and the customer's app may be the same app (e.g., with different functionalities enabled) or may be a different app. FIG. 7 shows an example of an order screen on the app used by the customer. The app communicates via the internet with the server 60. The server processes the order as discussed above and that order is then gathered and placed in coolers by the driver as described above. The driver then proceeds to deliver said order to the customer.

Via one or more databases, the servers 60 store, for each order, a list of goods in that order and customer information including the customer address. The databases also contain, for each good, dimensions (e.g., weight (or mass) and linear dimensions). The databases also contain, for each good, storage parameters such as a storage temperature range. From this database information, the server may calculate an optimum distribution of goods in the order across one or more coolers at each of one or more temperature ranges.

The servers 60 may further attend to assigning orders to individual van trips and plan routes. In doing so, the servers may group orders to share coolers in an efficient manner. For example, multiple orders at a given route stop (e.g., apartment building) or at close route stops may share coolers, allowing coolers to be emptied early in the route and then shut off to save battery energy and thus reduce charge time when returned to the pre-cooling room.

For each route, the servers 60 may thus determine the required number of coolers 100 and create pick lists for each order. The pick lists identify each good in the order and the particular cooler into which such good is to be loaded. For example, with n coolers in a route, the server may assign each a number from 1 to n. The pick lists may have multiple uses and multiple levels. For example, the pick lists may be used by non-driver warehouse workers and then by drivers as discussed below. The pick lists may be printed paper lists and/or digital lists transmitted by the server(s) 60 to portable devices 400 (e.g., via WiFi or the like within the warehouse or via mobile device carrier (e.g., cellular)).

The server(s) 60 may then transmit the route pick list (containing pick lists for all orders in the route) to the smartphone 400 of the particular driver 52 for use by an app on the smartphone. The servers may transmit further route information such as an order of stops.

With the route pick list, the driver may go to the pre-cooling room and use his smartphone to select the n coolers for the route. The driver may use the app to send a signal to the coolers to interrogate the coolers about their status (e.g., temperature and battery charge level). In order to receive and act on the signal, the coolers may be in a standby/charge mode rather than being fully off. In this standby/charge mode the coolers only provide power to the onboard temperature sensor(s), processor, Bluetooth radio and status lights or audio transducer 388. In one example, all coolers at or below a predetermined threshold temperature and at or above a predetermined charge level respond with a visual or audible response (e.g., turning a light 388 on).

In an example of setting up the pick lists and allocating goods to coolers noted above, the server accesses the temperature database, a database on goods size, and a customer address database. Use of the customer address database allows the server to group goods of a given temperature range from separate orders at the same or nearby stops to cause coolers to be emptied as early as possible during the route. That also minimizes openings and closings of a given cooler. Thus coolers containing goods for late stops will not have been opened many times (if at all) prior to those stops. This further minimizes energy consumption and reduces chances of departure from the specified temperature range. However, any order that contains more than a cooler's worth of goods at a given temperature range could fill one or more coolers at that range and share only one cooler at that temperature range with goods from one or more other orders.

In the example, the server 60 determines the predetermined threshold temperature and predetermined charge level for a group of unique orders for a given route as a function of the estimated travel time to each customer's address and the storage temperature range for each of the goods in each unique order. In some cases a customer order may only be assigned coolers dedicated exclusively to that order. In alternative cases, it may be advantageous to mix multiple orders (or portions thereof) into the same cooler (e.g., as discussed above). In one specific example the driver's route consists of both Customer A's order and Customer B's order. Customer A places an order to an address located in an apartment complex ten miles from the warehouse 20. The server 60 determines that based on the total distance from the warehouse that a cooler needs a battery life of 90 minutes. Customer A's order contains three bags of apples that have a target temperature range of 0 Celsius to 10 Celsius. The server 60 determines that based on the quantity of apples in Customer A's order, two coolers are needed for Customer A's order, whereby one cooler will be filled completely with apples and a second cooler will have excess capacity. Customer B places an order to an address located in the same apartment complex as Customer A. Customer B's order contains three one-gallon jugs of milk that has a target temperature range of 0 Celsius to 3 Celsius. The server 60 determines that based on the amount of milk in Customer B's order, two unique coolers are needed because one cooler can only hold two one-gallon jugs of milk. The server 60 determines that one bag of apples from Customer A's order and one gallon of milk in Customer B's order are to be placed in the same cooler. Here the server 60 determines that the driver's route for Customer A and Customer B requires three coolers. The server determines the predetermined threshold to be coolers that both have a battery life of at least 90 minutes and a current temperature between 0 Celsius and 3 Celsius. The calculated predetermined threshold allows for the driver to place the apples or milk in any of three coolers. In other specific examples, the specific goods could have disparate storage temperatures requiring coolers set to different ranges from each other. The server may also determine that a cooler which will be emptied early in the route needs a lower starting charge (lower threshold computed by the server) than one (e.g., with the same target temperature range) that will empty later in the route. Different charge thresholds may also correspond (inversely) to different target temperature ranges.

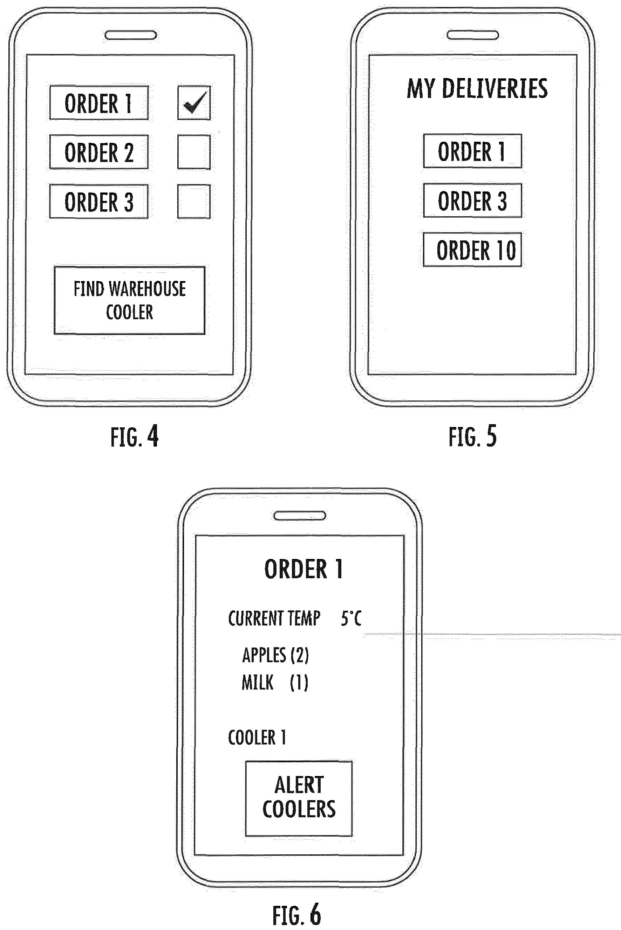

FIG. 4 shows a screen on the driver's smartphone generated by the driver's app allowing the driver to select an order and then page the cooler(s) required for that order. It may also be possible for the driver to select and page all coolers for all orders in a given route. The smartphone app may then select coolers meeting the threshold(s) and cause just those coolers to alert via audio and/or visual alert. The app may assign each of the selected coolers the appropriate number from 1 to n.

The driver physically segregates the selected coolers and may log them out of the pre-cooling area. For example, each cooler may have a QR code 210 (FIG. 1) that the driver scans using the app and smartphone camera.

In a simpler example where coolers simply have a binary status of ready or not, the app may select the needed amount or may page all ready coolers to alert. In the latter situation, the driver may just select the needed number indicated by the app and log them out of the pre-cooling area as discussed above.

The app may communicate to the server which coolers are being taken, so that the server may update the server's database of cooler status. The driver then takes the coolers to the fulfillment area and loads them using the pick list. In an exemplary situation, inside the fulfillment area goods have been pre-grouped and organized so that each order has a defined space where warehouse workers place the goods belonging to that particular order. The defined space could be a table with digital signage indicating the order number. As customers submit orders to the server(s) 60, the servers(s) in turn generate/transmit the pick lists for warehouse. Using the pick lists, warehouse workers gather the goods for each order from the storage area 42. The goods in the storage area 42 are grouped so that produce is co-located with other produce and dairy products are co-located with other dairy products and so forth. Signage indicates the particular class of a good, for example apples and additional signage identifies the specific type of a good, for example gala apples. Warehouse workers physically transport the goods belonging to each particular order from the storage area 42 to the fulfillment area 44 and place at the associated defined space belonging to that order. As noted above, the server may control electronic signage at each staging space in the in the fulfilment area to display an identification of the particular order staged there. Goods that may have no exterior packaging are stored in bags.

Upon selection of the coolers, the app, via Bluetooth, communicates to the coolers to set the temperature that the coolers will maintain during the route and may turn the coolers on. The driver brings the coolers to the fulfilment area. Using the pick list on the app on his smartphone, the driver loads each cooler with the goods assigned to that cooler. When displaying a pick list, the app may cause the associated cooler(s) to alert to identify themselves to the driver.

When all the coolers are loaded, the driver loads the coolers into the van and goes on the route (e.g., guided by the app on the smartphone).

Arriving at the first stop, the app may cause the coolers containing orders for that stop to emit a visual and/or audible alert. This may be done responsive to the app using the smartphone's GPS capability. Or it may be done responsive to the driver commanding the app. FIG. 5 shows an app screen allowing selection of a particular order. FIG. 6 shows an order screen resulting from the selection (e.g., the clicking of a FIG. 5 button). The FIG. 6 screen includes the list of goods in the order and a button to cause the app to communicate to the cooler(s) of that order to provide their visible and/or audible alert. Using the app to verify order contents, the driver may remove the coolers for a given order take them to the delivery point (front door, etc.) and deliver the goods from the coolers.

When coolers are empty, the app may command the empty coolers to shut down. One option is for the app to simply shut off all coolers that only have (had) goods for a given stop after the smartphone determines via GPS that a given time (e.g., five minutes) has elapsed since arriving at the stop. Another option is to shut off the cooler when the driver, using the app, enters that a given order has been delivered and the app database indicates that order emptied the particular cooler. The driver repeats for any further orders at that stop and then goes on to the next stop and so forth. This shutoff may be to a full off mode (e.g., where a power switch or plugging in would be required to activate the coolers rather than a mere Bluetooth signal.

As noted above, each cooler may be set to operate to maintain contents within a given temperature range. However there may be departures from such ranges and a decision on a responsive action may be made. The actions involved may include aborting delivery of the affected good(s). In case of such aborting, there could be an automatic order of a replacement. The actions involved could include discounting the affected goods or discounting the replacement. There may be communications to the customers. The communications may be merely informative of actions that will be taken or may be queries regarding what action should be taken (e.g., replacement vs. refund vs. discount on affected goods).

In an example described below, decision-making is biased toward the server(s) 60 with relatively low logic involved in the cooler 100 and app on the smartphone 400. In this example, the cooler periodically takes an internal temperature reading with the sensor 390 and sends the temperature (via Bluetooth) to the app on the smartphone 400. The smartphone, in turn, passes the temperature to the server 60 over the internet via the cellular carrier.

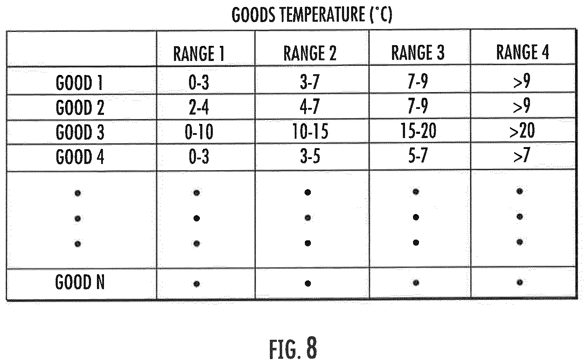

The server may access several databases. One database or portion of a database has goods-specific temperature rules. This may contain data for defining multiple levels of acceptability of departures from a target temperature for each good (e.g., each SKU) in the system. FIG. 8 shows one example. In FIG. 8, Range 1 may represent the most narrow target, with subsequent ranges being less desirable. In this example, the departure is measured as an instantaneous departure. Others may require a threshold duration in a range before triggering that range. Although the FIG. 8 example lists several ranges for each good, an alternative defines one temperature or range (e.g.., the most preferred "Range 1") while the remaining ranges are defined relative thereto (e.g., Range 2 could be up to 5% (of the difference between the Range 1 max and min) above the Range 1 max. or below the Range 1 min.; Range 3 could be up to 5% to 10% above the Range 1 max. or below the Range 1 min.; Range 4 could be more than 10% above the Range 1 max. or below the Range 1 min.).

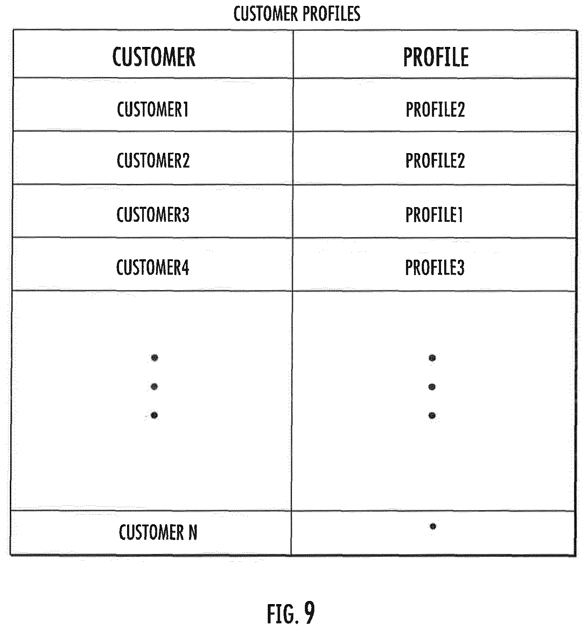

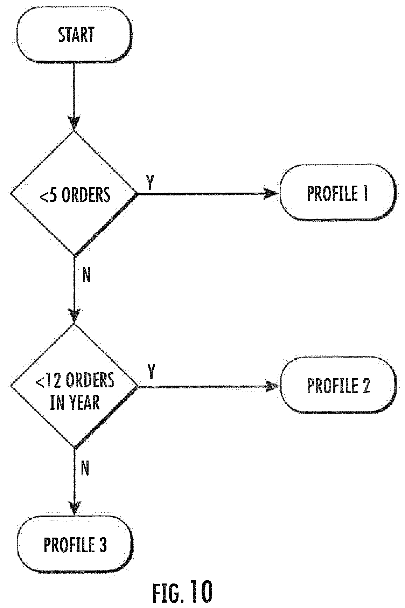

Other databases or portions are customer-specific and contain data for defining customer-specific actions to be taken for various levels of departure. This may efficiently build customer satisfaction and loyalty. In one example, a database or portion thereof associates each customer with one of a small number of pre-defined profiles. FIG. 9 shows an example. As an alternative, the server may in real time determine a profile to associate with the customer. This may involve applying rules to data taken from a database of customer orders to associate with a profile. FIG. 10 shows a flowchart for an example having three pre-defined profiles: profile 1 (new user); profile 2 (intermittent user); and profile 3 (heavy user). A first database query is whether the customer has less than 5 total prior orders. If yes, then that customer is assigned the new user profile. If no, then a further query is whether the customer has less than 12 orders in the last 12 months. If yes, then that customer is assigned the intermittent user profile. If no, then that customer is assigned the heavy user profile. Other customer use intensity factors could be used. Yet further factors involve things like: paid premium member status; or geographic location of the customer. The geographic location may be relevant in circumstances such as a new area being opened to delivery service where it is desired to build goodwill.

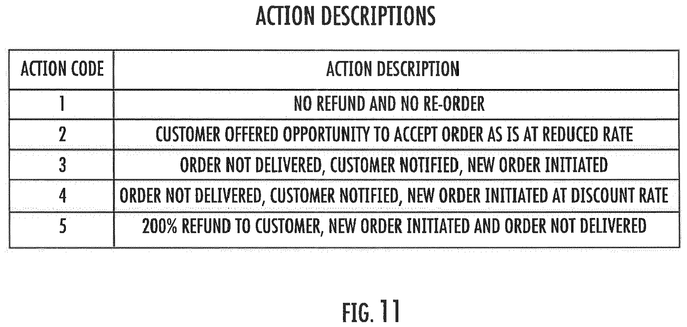

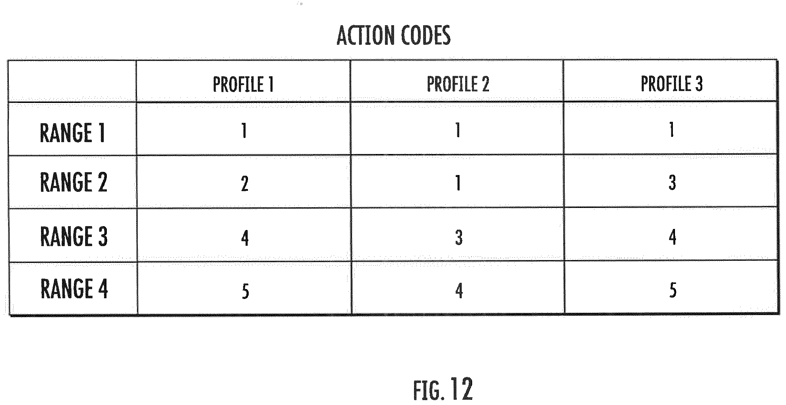

A further database or portion thereof (FIGs. 11 and 12) associates each of the pre-defined profiles with actions to be taken in response to the FIG. 8 departures. In the illustrated example, the FIG. 11 database associates an action description with an action code. Then the FIG. 12 database associates the action codes with the particular combination of profile and departure.

A further variation is to create a custom profile for a given customer. For example, for a departure in a given range the customer may be able to choose between a given discount on accepting a good and a lesser discount on getting a replacement. The absolute and/or relative discounts or other remedies offered to a given customer may depend on factors similar to those used in the example above (new customer, intermediate customer, heavy customer, etc.).

During the delivery journey the driver's smartphone app regularly interrogates the coolers and receives measured temperature from the coolers. The app then transmits this temperature data back to the server 60 via the wireless carrier and internet. The server accesses the order database and, for each cooler compares the measured temperatures to the standards (e.g., the FIG. 8 ranges) for each good in the cooler. For each good in the cooler in view of the associated range status (Range 1 vs. Range 2, etc.), the server may look up in the FIG. 12 database portion a responsive action code. Depending on the nature of the departure from Range 1 and the customer profile, the responsive action may be implemented by some combination of: communication back to the driver's smartphone to remove a good from the delivery (e.g., instruct the driver to quarantine that good); communication back to the customer (e.g., via the app on the customer's smartphone; to merely inform of an action or to offer the customer a choice of options); and internal actions such as processing a reorder.

Both the smartphone and the cooler itself may store the temperature history (either all history or just departures) in their memory/storage (e.g., solid state memory/storage). This may address communications cycles (e.g., there is cooler-to-smartphone (over Bluetooth) or smartphone-to-server communication (via the cellular carrier and internet) only at intervals of several minutes or more. It may also address loss of communication (e.g., a temporary lack of cell reception or when the driver takes his smartphone beyond Bluetooth range (e.g., when delivering goods from one cooler he may walk out of range of the others). At each cycle or after resumption of communication, queued data may be relayed.

Given the foregoing tables, assume that Range 2 requires the aforementioned less than 5% departure and Range 3 allows up to 10%. If the temperature of a cooler rises to 6% more than Range 1 for a particular good, the server will take the Range 3 action as follows. If the server determines the customer associated with that good is an intermittent user (Profile 2) the server notifies the customer of the temperature error and action and takes the action (stopping delivery and placing a new order automatically without any additional cost to the customer). If, instead, the server determines the customer to be a new user (Profile 1) or a heavy user (Profile 3), the server notifies the customer of the temperature error and action and takes the action (stopping delivery and placing a new order automatically at a discount).

If a Range 2 departure (e.g., 1% in the example above) and a new customer, the server communicates to the customer a message to give the customer the choice of whether to accept the good at a discount on the purchase price or to have the server stop delivery and initiate a replacement order without discount. If an intermittent user, no refund/cancellation/reorder and no communication. If a heavy user, the server stops delivery and places a new order automatically without any additional cost to the customer.

If, a Range 3 departure and the user is a new or heavy user, the server notifies the customer notified, places a new order without any additional cost to the customer, and processes a refund greater than the cost of the good. If only an intermittent user, then the server stops delivery and places a new order only at a discount.

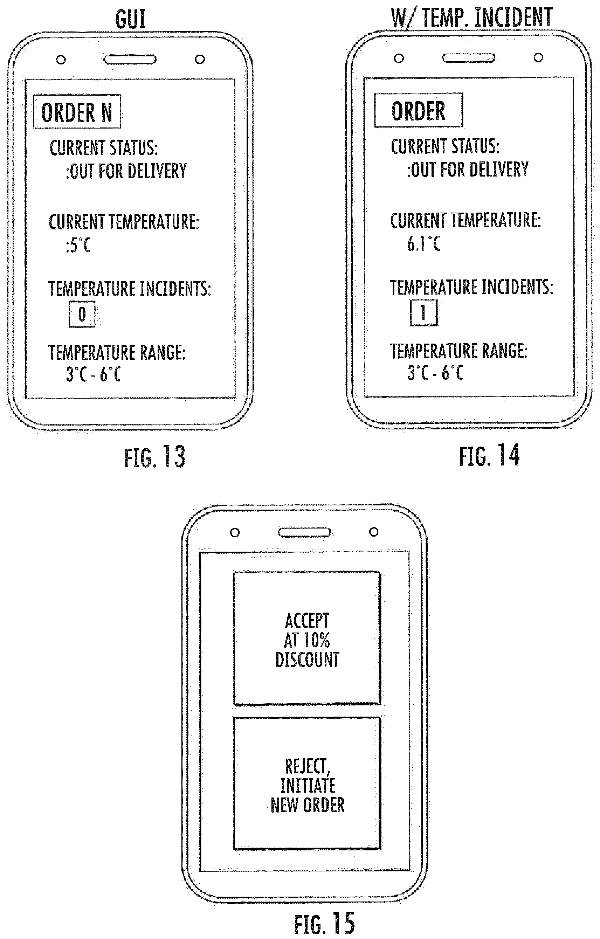

FIG. 13 shows an app screen on the customer smartphone showing status information received from the server 60. Exemplary fields displayed include: delivery status (e.g., not yet shipped, out for delivery, delivered, and the like); current cooler temperature for each unique cooler associated with a given order; whether there have been any temperature departures; the target cooler temperature(s) (e.g., Range 1 above); and the like. FIG. 14 shows the FIG. 13 app screen upon occurrence of one departure. The app may pop the FIG. 14 screen up automatically upon notification from the server of a departure. The customer may click the representation of the departure (e.g., an icon or the numeral "1" in the figure to select. Clicking on the representation brings up an options screen (FIG. 15) if options are available (e.g., stopping delivery of a good and ordering a replacement for that good as discussed above).

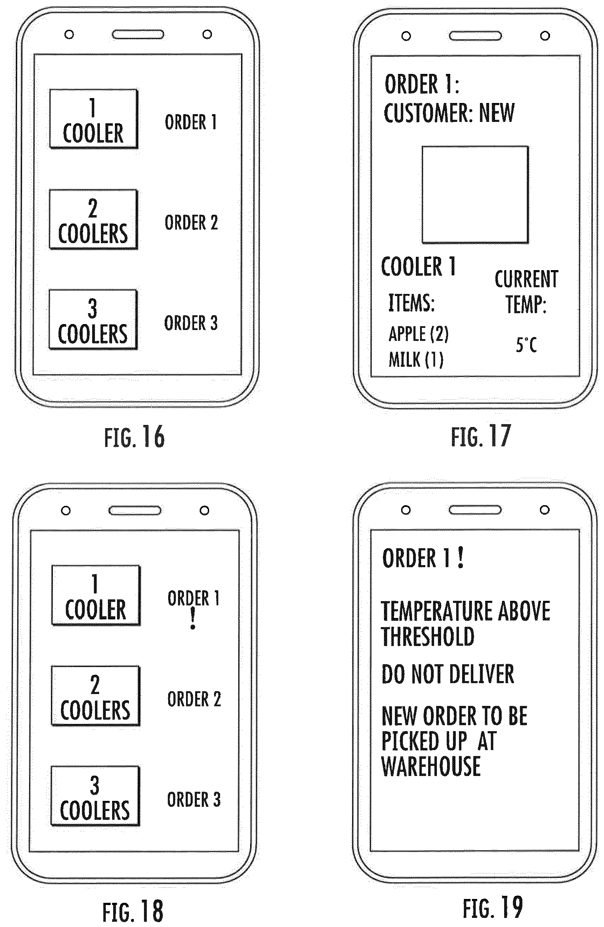

FIG. 16 shows an order list screen of the driver's app during a delivery trip. The driver may select an order on the screen for further information (FIG. 17). FIG. 18 shows the FIG. 16 screen upon occurrence of a departure (e.g., a departure requiring a change in delivery). The FIG. 18 screen highlights the affected order(s) and the driver can then select one of the orders for further information regarding how to handle (FIG. 19).

When the route is complete, the driver returns to the warehouse and returns the coolers to the pre-cooling room, plugging them in so that they go back to the standby/charge mode. Or the app may place the coolers in their standby/charge mode. The app communicates to the server that the coolers are returned. Any memory/storage on the cooler may be cleared of usage data or otherwise reset either manually or via the app.

Although Bluetooth and WiFi short range wireless communications protocols are referenced, other protocols may be substituted. Similarly although the GPS geolocation system is referenced other satellite systems may be used as may be non-satellite systems such as triangulation based on cell towers, WiFi hotspots, and the like.

The use of "first", "second", and the like in the description and following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, various of the functions (and associated programming and data) may be combined, further divided, or otherwise reapportioned among different devices (servers, smart phones other terminals, and the like). Furthermore, when applied to an existing basic system (e.g., cooler configuration, particular goods, particular e-commerce ordering system, etc.), details of such configuration or its associated use may influence details of particular implementations. Accordingly, other embodiments are within the scope of the following claims.

## Claims

1. A method for delivering one or more orders of goods (42) to one or more customers using a one or more coolers (100), each cooler comprising:
a compartment (212); and
an environmental control unit (290) including:
a temperature sensor (390);
a radio (370); and
a controller (330) coupled to the thermoelectric device, temperature sensor, and radio,
the method comprising:
loading the at least one cooler with goods;
after the loading, transporting the one or more coolers to one or more destinations;
unloading the one or more coolers at the one or more destinations;
during the transporting, monitoring, via the associated temperature sensor, respective temperatures of the one or more coolers;
determining noncompliance of the measured temperature with at least one standard; and
responsive to the noncompliance taking a remedial action

2. The method of claim 1, wherein the remedial action comprises sending a communication to one or more of the customers whose orders were subject to the noncompliance and/or aborting delivery of one or more goods subject to the noncompliance.

3. The method of claim 1 or 2, wherein: the environmental control unit has a thermoelectric device and a battery for powering the thermoelectric device to cool the compartment and the controller is coupled to the thermoelectric device.

4. The method of claim 1, 2 or 3 wherein: the monitoring comprises communicating via the radio to a handheld device.

5. The method of any preceding claim wherein: the communication requests an instruction on a disposition of the goods subject to the noncompliance.

6. The method of any preceding claim wherein: the sending comprises a server sending to a customer app.

7. The method of any preceding claim further comprising: determining a further action based on at least one of a nature of the noncompliance and a profile of each of the one or more of the customers whose orders were subject to the noncompliance.

8. The method of claim 7 wherein: the determining of the further action is performed by one or more devices using a database of customer-specific information.

9. The method of claim 7 or 8 wherein: the determining of the further action is performed by one or more devices using a database of goods-specific information regarding compliance with said standard.

10. One or more devices (60, 400) for managing delivery of one or more orders of goods to one or more customers using one or more coolers, each cooler comprising:
a compartment; and
an environmental control unit (290) including:
a temperature sensor;
a radio; and
a controller coupled to the thermoelectric device, temperature sensor, and radio,
the one or more devices running one or more programs for:
receiving measured temperature data for the one or more coolers;
determining noncompliance of the measured temperature with at least one standard; and
responsive to the noncompliance taking a remedial action.

11. The one or more devices of claim 10 wherein: the remedial action comprises sending a communication to one or more of the customers whose orders were subject to the noncompliance and/or aborting delivery of one or more goods subject to the noncompliance.

12. The one or more devices of claim 10 or 11 wherein: the communication requests an instruction on a disposition of the goods subject to the noncompliance.

13. The one or more devices of claim 10, 11 or 12 wherein the program is further configured to: determine the remedial action based on at least one of a nature of the noncompliance and a profile of each of the one or more of the customers whose orders were subject to the noncompliance.

14. The one or more devices of claim 10 wherein: the determining of the remedial action is performed by the one or more devices using a database of customer-specific information and/or wherein the determining of the remedial action is performed by the one or more devices using a database of goods-specific information regarding compliance with said standard.

15. The one or more devices of claim 10 wherein: the one or more devices comprise one or more servers (60), or wherein: the one or more devices comprise a combination of one or more servers (60) and one or more portable electronic devices (400).
